Europäisches Patentamt

European Patent Office

Office européen des brevets

(11) Veröffentlichungsnummer: **0 412 194 B1**

(12) **EUROPÄISCHE PATENTSCHRIFT**

(45) Veröffentlichungstag der Patentschrift: **02.06.93**

(21) Anmeldenummer: **89114850.4**

(22) Anmeldetag: **10.08.89**

(51) Int. Cl.⁵: **G01T 1/178**, G01T 1/204

㊸ Verfahren zur Messung radioaktiver Nuklide.

(43) Veröffentlichungstag der Anmeldung:
**13.02.91 Patentblatt 91/07**

(45) Bekanntmachung des Hinweises auf die
Patenterteilung:
**02.06.93 Patentblatt 93/22**

(84) Benannte Vertragsstaaten:
**DE FR GB IT NL SE**

(56) Entgegenhaltungen:
**EP-A- 0 203 901**

**REVIEW OF SCIENTIFIC INSTRUMENTS, Band
54, Nr. 9, September 1983, Seiten 1227-1233,
American Institute of Physics, New York, US;
W.W. NAZAROFF: "Radon daughter carousel:
An automated instrument for measuring indoor concentrations of 218Po, 214Pb, and
214Bi"**

**NUCLEAR INSTRUMENTS AND METHODS,
Band 49, 1967, Seiten 29-37, North-Holland
Publishing Co., Amsterdam, NL; G. ASSAF et
al.: "Direct determination of short-lived radon daughter products on air filters by liquid scintillation counting using a delayed-
coincidence technique"**

(73) Patentinhaber: **RADIOANALYTISCHES LABOR
BUHEITEL
Agelsberg Eichenstrasse 4
W-8077 Reichertshofen(DE)**

(72) Erfinder: **Buheitel, F. Dr.
Agelsberg Eichenstrasse 4
W-8077 Reichertshofen 2(DE)**

(74) Vertreter: **Kador & Partner
Corneliusstrasse 15
W-8000 München 5 (DE)**

**Beschreibung**

Die Erfindung bezieht sich auf ein Verfahren zur Flüssigszintillationsmessung radioaktiver Nuklide der natürlichen Zerfallsreihen nach dem Prinzip der verzögerten Koinzidenz.

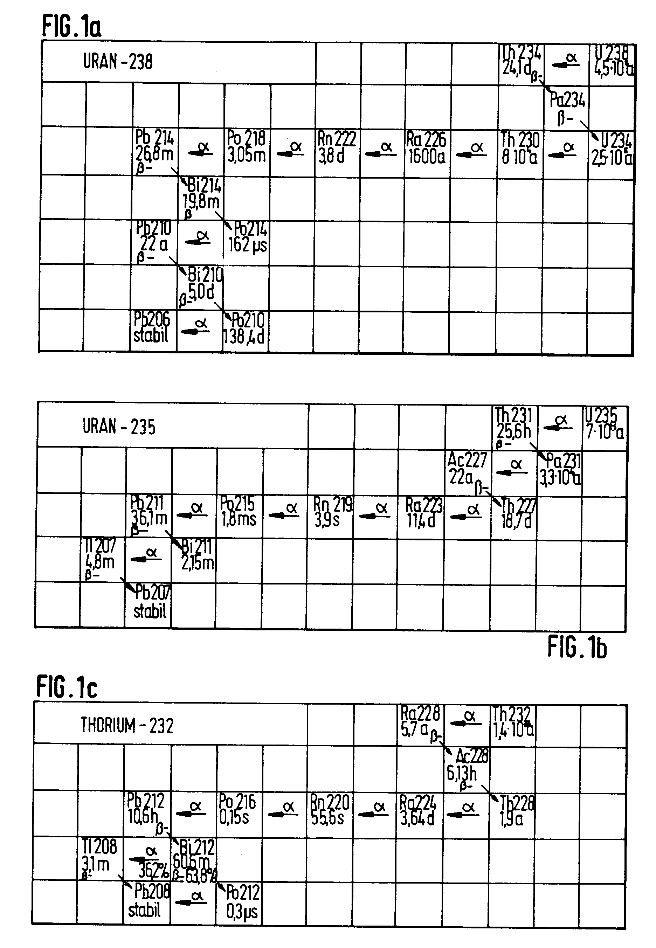

Wie aus den Fig. 1a, 1b und 1c ersichtlich, kommt in jeder der drei natürlichen Zerfallsreihen ein sehr kurzlebiges Glied vor:

In der Zerfallsreihe des U-238 (Fig. 1a) erscheint als Folgeprodukt von Rn-222 das Nuklid Bi-214, das unter Emission von $\beta$-Strahlung in Po-214 zerfällt, welches seinerseits mit einer Halbwertszeit von 0,16 ms unter Emission von $\alpha$-Strahlung zerfällt.

In der Zerfallsreihe des U-235 (Fig. 1b) erscheint als Folgeprodukt von Ra-223 das Nuklid Rn-219, das unter Emission von $\alpha$-Strahlung in Po-215 zerfällt, welches seinerseits mit einer Halbwertszeit von 1,8 ms unter Emission von $\alpha$-Strahlung zerfällt.

In der Zerfallsreihe des Th-232 (Fig. 1c) erscheint als Folgeprodukt des Ra-224 das Nuklid Bi-212, das zum Teil unter Emission von $\beta$-Strahlung in Po-212 zerfällt, welches seinerseits mit einer Halbwertszeit von 0,3 $\mu$s unter Emission von $\alpha$-Strahlung zerfällt. Bei einigen der Zerfälle wird zusätzlich Gamma-Strahlung emittiert.

Verfahren zur Messung von Nukliden dieser Zerfallsreihen nach dem Prinzip der verzögerten Koinzidenz benützen die schnelle Aufeinanderfolge der Zerfälle eines Mutternuklids Bi-214, Rn-219 oder Bi-212 und seines kurzlebigen Tochternuklids Po-214, Po-215 bzw. Po-212.

Eine für solche verfahren geeignete Meßapparatur besteht entweder aus einem einzigen Detektor, der auf die Zerfälle von Mutter- und Tochternuklid anspricht, oder sie besteht aus mehreren Detektoren, die von unterschiedlicher Bauart sein können, so daß z. B. von zwei Detektoren einer speziell auf die Zerfälle des Mutternuklids und der andere speziell auf die Zerfälle des Tochternuklids anspricht.

Wichtig sind hohe Ansprechwahrscheinlichkeiten für beide Zerfälle, weil die Wahrscheinlichkeit für den Nachweis eines Paares proportional zu dem Produkt aus diesen Ansprechwahrscheinlichkeiten ist.

Durch die aufeinanderfolgenden Zerfälle entstehen in der Meßapparatur, wenn man der Einfachheit halber von der begleitenden Gamma-Strahlung absieht, Paare von schnell aufeinanderfolgenden Impulsen. Die Koinzidenz dieser Impulse innerhalb eines kurzen Zeitintervalls erlaubt die Unterscheidung von anderen, statistisch über die Meßzeit verteilten Impulsen, sofern deren mittlerer Abstand wesentlich größer als das Koinzidenzzeitintervall ist. Solche Impulse werden z. B. durch andere Nuklide in der Meßprobe, durch externe Gamma-Stahlung oder durch Höhenstrahlung hervorgerufen. Die Verzögerung des zweiten Impulses eines Paares gegenüber dem ersten Impuls erlaubt die Unterscheidung gegenüber wesentlich schnelleren Koinzidenzereignissen, die z. B. durch einen $\beta$- oder $\alpha$-Zerfall mit sofortiger Gamma-Emission, durch eine Gamma-Kaskade oder durch einen Teilchenschauer verursacht werden können.

Verfahren zur Messung von Nukliden der natürlichen Zerfallsreihen nach dem Prinzip der verzögerten Koinzidenz sind bereits bekannt (Rankin, M. O., "The use of coincidence counting techniques for analyzing low level Plutonium contamination on filters", Nuclear Instruments and Methods Nr. 24 (1963), S. 221 - 226; Gebauer, H., "Verfahren zur Kompensation der natürlichen Luftaktivität mit Hilfe von Beta-Alpha-Pseudokoinzidenzen", Kerntechnik 7. Jg. (1965), H7, S. 322 - 325; Assaf, G. und Gat, J.R., "Direct determination of short-lived Radon daughter products on air filters by liquid scintillation counting using a delayed-coincidence technique", Nuclear Instruments and Methods Nr. 49 (1967), S. 29 - 37).

Das Verfahren mit der höchsten Nachweiswahrscheinlichkeit wird dabei in der Literaturstelle: Nuclear Instruments and Methods Nr. 49 (1967), S. 29 - 37, beschrieben, welche die Messung von Zerfallsprodukten des Rn-222 in Luft zum Ziel hat. Nach dieser Literaturstelle wird ein Luftfilter nach Beendigung des Luftdurchsatzes in einen Flüssigszintillator-Cocktail getaucht. Die Lichtblitze, welche durch die bei den Zerfällen der gesammelten Atome ausgesandten $\beta$- und $\alpha$-Teilchen verursacht werden, werden durch eine Anordnung, bestehend aus Photomultiplier und nachfolgendem Diskriminator, in logische Impulse umgewandelt. Weil der Szintillator den Luftfilter durchtränkt und von allen Seiten umgibt, wird für die ausgesandten Teilchen nahezu eine $4\pi$-Meßgeometrie erreicht. Weil der Luftfilter im Szintillator transparent wird, kann auch das Licht von Blitzen, die auf der vom Photomultiplier abgewandten Seite des Filters erzeugt werden, den Photomultiplier erreichen.

Die Schwelle des Diskriminators ist möglichst niedrig eingestellt, damit beim $\beta$-Zerfall des Bi-214, des Mutternuklids des kurzlebigen Kettengliedes Po-214, die emittierten Elektronen bis zu einer möglichst niedrigen Energie hinab erfaßt werden. Ein erster Zähler zählt sämtliche logischen Impulse am Ausgang des Diskriminators.

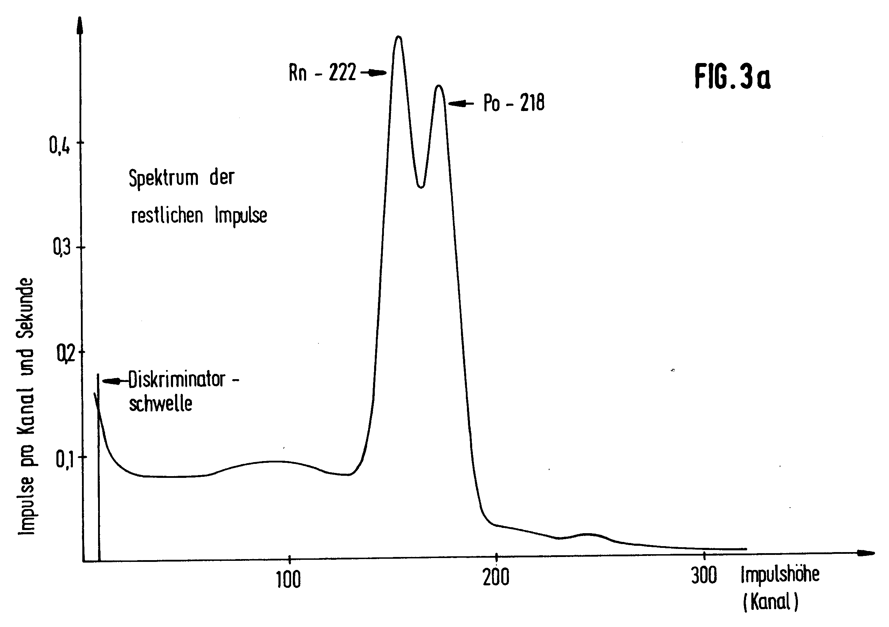

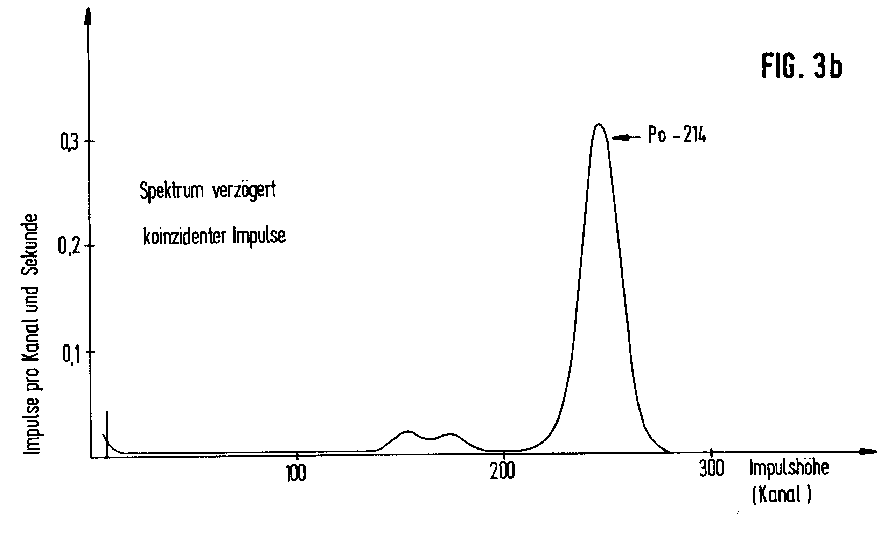

Zur Messung der Zerfälle des kurzlebigen Nuklids Po-214 nach dem Prinzip der verzögerten Koinzidenz werden die logischen Impulse am Ausgang des Diskriminators folgendermaßen weiterverarbeitet, wie besonders anschaulich aus Fig. 3 dieser Literaturstelle hervorgeht: Eine in der zitierten Arbeit "delay-gate"

EP 0 412 194 B1

genannte Einheit erzeugt nach jedem sogenannten "random gate opening"-Diskriminatorimpuls einen sogenannten "gate open"-Impuls. Dieser "gate open"-Impuls beginnt mit einer Verzögerung Delta $t_d$ (d = delay) nach dem Diskriminatorimpuls und hat die Länge Delta $t_g$ (g = gate). Als "random gate opening"-Impulse werden in dieser Literaturstelle alle logischen Impulse am Ausgang des Diskriminators bezeichnet, die nicht selbst während eines "gate-open"-Intervalls auftreten. Eine Koinzidenzeinheit, deren zwei Eingänge mit den Ausgängen des Diskriminators und der "delay-gate"-Einheit verbunden sind, erzeugt an ihrem Ausgang genau dann einen logischen Impuls, wenn am Ausgang des Diskriminators ein Impuls während eines "gate open"-Impulses am Ausgang der "delay-gate"-Einheit auftritt. Die Impulse am Ausgang der Koinzidenzeinheit werden von einem zweiten Zähler gezählt.

Die optimale Länge des "gate open"-Intervalls liegt nach dieser Literaturstelle zwischen dem 5-fachen und dem 10-fachen der Halbwertszeit des Po-214 (0,8 ms bzw. 1,6 ms). Die Verzögerungzeit Delta $t_d$ wird zu 2 $\mu$s gewählt, das sind ca. 7 Halbwertszeiten des Po-212 aus der Zerfallsreihe des Th-232. Falls ein Diskriminatorimpuls von einem Zerfall des Bi-212, der Mutter von Po-212, herrührt, ist das Atom des kurzlebigen Tochternuklids Po-212, das bei diesem Zerfall gebildet wurde, beim Start des "gate open"-Intervalls mit großer Wahrscheinlichkeit schon zerfallen, d. h. die Verzögerungszeit bewirkt, daß sein Zerfall nicht fälschlicherweise als Po-214-Zerfall registriert wird.

In dieser Literaturstelle wird darauf hingewiesen, daß das beschriebene Meßverfahren mit entsprechend kürzeren Zeitintervallen Delta $t_d$ und Delta $t_g$ auch zur Messung der Zerfälle des Nuklidpaares Bi-212/Po-212 aus der Zerfallsreihe des Th-232 geeignet ist.

Das beschriebene Meßverfahren ist auf die Messung von solchen Proben übertragbar, die aus einem Szintillator bestehen, in den die zu messenden Nuklide anders als über Filter eingebracht wurden.

Ferner besteht die Möglichkeit, auch solche Impulse, die selbst während eines "gate-open"-Intervalls Delta $t_g$ auftreten, als "gate-opening"-Impulse zu berücksichtigen.

Wenn starke oder sehr schwache Aktivitäten zu messen sind oder wenn die Lichtausbeute in den verschiedenen Meßproben aus einer Meßreihe unterschiedlich groß ist, weist das Verfahren nach dieser Literaturstelle jedoch folgende Schwächen auf:

(1) Bei der Messung von Proben mit hoher Zählrate wird ein großer Teil der gesamten Meßdauer von "gate open"-Intervallen eingenommen. Es besteht dann auch für solche Diskriminatorimpulse, die nicht von einem Po-214-Zerfall herrühren, eine nicht vernachlässigbare Wahrscheinlichkeit, daß sie während eines "gate open"-Intervalls auftreten und im zweiten Zähler als Zerfälle des Po-214 registriert werden. Dieser Fehler durch zufällige verzögerte Koinzidenzen bei hohen Zählraten ist groß.

(2) Ist die Aktivität der zu messenden Nuklide in einer Meßprobe klein im Vergleich zur Untergrundzählrate U, so ist die Rate der zufälligen verzögerten Koinzidenzen gleich $U^2$.Delta $t_g$. Bei einer Untergrundzählrate von z. B. 0,2 Impulsen/s und Delta $t_g$ = 1 ms ergibt sich die theoretische Rate zufälliger verzögerter Koinzidenzen zu $4 . 10^{-5}$ Impulsen/s. Zusätzlich erscheinen im zweiten Zähler noch die echten verzögerten Koinzidenzen von Reaktionsprodukten einzelner Teilchen der Höhenstrahlung. Dadurch wird die Messung von Ra-226- oder Rn-222-Aktivitäten im Bereich von einigen $10^{-5}$ Bq schwierig.

(3) Ist die Lichtausbeute zweier Meßproben verschieden, so liegt ein unterschiedlich großer Anteil der Impulse, die von den Bi-214-$\beta$-Zerfällen erzeugt werden, oberhalb der Diskriminatorschwelle, d. h. die Zählausbeute ist für die Meßproben verschieden. Das bekannte Meßverfahren sieht keine Möglichkeit vor, die es gestattet, Unterschiede in der Lichtausbeute zu erkennen.

Zur Messung von Nukliden der natürlichen Zerfallsreihen bedient man sich vor allem der $\alpha$-Spektroskopie. Deshalb sollen hier kurz die empfindlichsten Verfahren der $\alpha$-Spektroskopie diskutiert werden.

Am häufigsten werden zur $\alpha$-Spektroskopie Sperrschichtdetektoren oder Gitterionisationskammern verwendet. Beide Systeme haben eine Nachweiswahrscheinlichkeit von maximal 50 %. Für beide Systeme muß die Meßprobe in Form einer sehr dünnen Schicht vorliegen. Dicke Meßproben würden wegen der Selbstabsorption der $\alpha$-Teilchen breite $\alpha$-Peaks verursachen. Dadurch ginge die eigentliche Stärke dieser Systeme, nämlich die hohe Energieauflösung, verloren. Besonders bei Radium, dessen Messung eine der wesentlichen Anwendungen der Erfindung ist, ist die quantitative Verarbeitung zu einer dünnen Meßprobe schwierig.

Ein verhältnismäßig neues Verfahren ist die Flüssigszintillations-$\alpha$-Spektroskopie mit pulse-shape-Analyse zur Unterscheidung von $\beta$- und $\alpha$-Zerfällen (Mc Dowell, W. J., "Alpha Liquid Scintillation Counting: Past, Present, and Future" in "Liquid Scintillation Counting Recent Applications and Development", Vol. I, Physical Aspects, Academic Press, New York 1980). Bei diesem Verfahren werden die zu messenden Nuklide in der Regel als organische Komplexe im Szintillator-Cocktail gelöst. Die Zählausbeute des Verfahrens beträgt 100 %. Ein wesentlicher Nachteil des bekannten Verfahrens ist, daß die Meßproben hohe Anforderungen bezüglich ihrer Zusammensetzung und Reinheit erfüllen müssen, damit die Unterscheidung von $\beta$- und $\alpha$-Zerfällen mittels pulse-shape-Analyse möglich ist.

3

Aufgabe der Erfindung ist es, die Selektivität und damit auch die Empfindlichkeit und die Genauigkeit der Messung einiger Nuklide der natürlichen Zerfallsreihen nach dem Prinzip der verzögerten Koinzidenz zu erhöhen.

Dies wird erfindungsgemäß durch die im Anspruch 1 angegebenen Maßnahmen erreicht. Das erfindungsgemäße Verfahren kann insbesondere zur Messung extrem niedriger Aktivitäten von Rn-222, Ra-226, Ra-224 und Ra-228 und zur Korrektur des Quenching bei der Flüssigszintillationsmessung verwendet werden.

In der Zeichnung zeigen:

Fig. 1a-1c      die drei natürlichen Zerfallsreihen;

Fig. 2      schematisch die Aufeinanderfolge des Zerfalls eines Mutternuklids und seiner kurzlebigen Tochter; und

Fig. 3a und 3b      jeweils das Spektrum einer radonhaltigen Probe, gemessen nach dem erfindungsgemäßen Verfahren

Die Messung von z. B. Rn-222 aus der Zerfallsreihe des U-238 geht erfindungsgemäß z. B. folgendermaßen vor sich: Das Rn-222 wird mit einem Flüssigszintillator vermischt. Nach wenigen Stunden sind die Folgeprodukte des Rn-222 bis zum Po-214 praktisch im radioaktiven Gleichgewicht, d. h. es zerfallen von jedem der Folgeprodukte pro Zeitintervall gleich viele Kerne wie vom Rn-222.

Die Lichtblitze, die von den emittierten Teilchen im Szintillator erzeugt werden, werden durch Photomultiplier und anschließende Verstarkungseinheit in Spannungsimpulse umgewandelt, deren Höhe ein Maß für die Intensität der Lichtblitze ist. Dabei ist es unwesentlich, ob ein oder mehrere Photomultiplier verwendet werden und ob zwischen der Intensität eines Lichtblitzes und der Impulshöhe ein linearer oder, wie bei manchen käuflichen Flüssigszintillationsspektrometern üblich, ein logarithmischer Zusammenhang besteht.

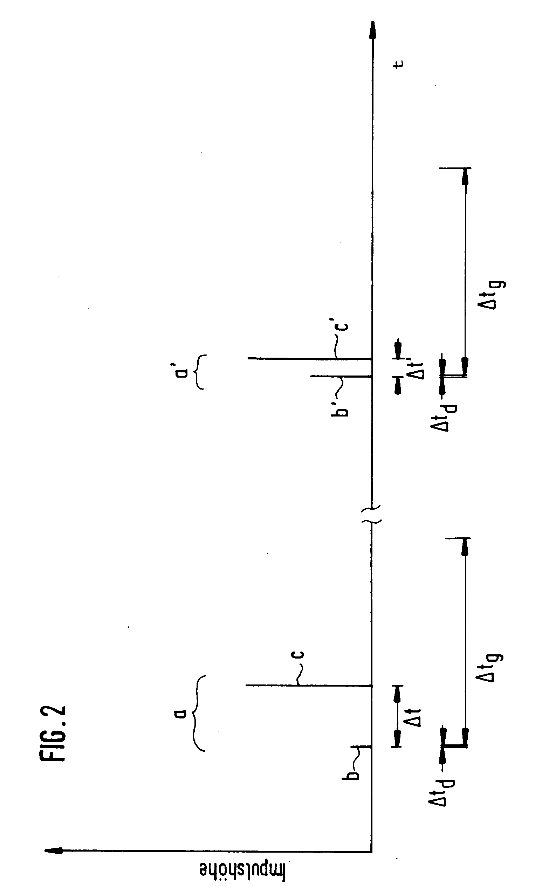

In Fig. 2 ist ein Diagramm wiedergegeben, das die Aufeinanderfolge der Lichtimpulse im Szintillator bzw. der zugehörigen Spannungsimpulse am Ausgang der Verstärkungseinheit veranschaulicht. Neben den Impulsen, die von den Zerfällen des Rn-222, Po-218, Pb-214 und dem Zähluntergrund herrühren, treten Paare kurz aufeinanderfolgender Impulse auf, die von den Zerfällen des Bi-214 und seiner Tochter Po-214 herrühren. Das Po-214 hat eine sehr kurze Halbwertszeit von ca. $1{,}6 \cdot 10^{-4}$ s. Innerhalb dieser Zeit zerfällt also die Hälfte aller Po-214-Kerne, die gerade kurz vorher durch einen $\beta$-Zerfall des Bi-214 gebildet worden sind. So ist z. B. nach 5 Halbwertszeiten (ca. $8 \cdot 10^{-4}$ s) ein neu gebildeter Po-214-Kern mit einer Wahrscheinlichkeit von 97 % zerfallen.

Bei den Impulspaaren a und a', welche durch den $\beta$-Zerfall b, b' des Mutternuklids Bi-214 und den $\alpha$-Zerfall c, c' des Tochternuklids Po-214 entstehen, ist der Impuls des Tochternuklids zeitlich um Delta t = $3 \cdot 10^{-4}$ s und Delta t' = $0{,}8 \cdot 10^{-4}$ s versetzt.

Weil Delta t und Delta t' größer als das gewählte Verzögerungszeitintervall Delta $t_d$ (z.B. $3 \cdot 10^{-6}$ s) und kleiner als die Summe aus Delta $t_d$ und dem "gate open"-Intervall Delta $t_g$ (z. B. $1 \cdot 10^{-3}$ s) sind, werden die Impulspaare a und a' als Ergebnisse von Zerfällen des Nuklidpaares Bi-214/Po-214 betrachtet. Delta $t_d$ und Delta $t_g$ in Fig. 2 haben dabei die vorstehend erwähnte Bedeutung.

Die beim $\beta$-Zerfall des Bi-214 emittierten Elektronen weisen eine breite Energieverteilung auf (s. z. B. b und b' in Fig. 2). Die $\alpha$-Teilchen des Po-214 haben dagegen einen scharfen Energiewert von 7,69 MeV (s. z. B. c und c' in Fig. 2) und liefern in einem Impulshöhen- bzw. Energiespektrum einen relativ scharfen Peak, dessen Breite allein von Eigenschaften der Meßanordnung abhängt.

Anstatt wie nach den bekannten Verfahren die Paare der Zerfälle von Mutternuklid und kurzlebigem Tochternuklid nur zu zählen, nimmt man daher gemäß der Erfindung das Impulshöhenspektrum des kurzlebigen Tochternuklids, im vorstehend genannten Beispiel der Messung von Rn-222 also das Spektrum des Po-214, auf. Dies kann derart geschehen, daß entweder überhaupt nur diejenigen Impulse in einem Spektrum abgespeichert werden, die gegenüber einem vorhergehenden Impuls, der höher als eine eingestellte Diskriminatorschwelle ist, um mindestens Delta $t_d$ und höchstens Delta $t_d$ + Delta $t_g$ verzögert sind, oder daß diese Impulse getrennt von allen anderen Impulsen in einem separaten Spektrum abgespeichert werden.

Im letzteren Fall werden also zwei Spektren aufgenommen:

Das "Spektrum verzögert koinzidenter Impulse" und das "Spektrum der restlichen Impulse".

Eine besonders einfache Modifikation der normalerweise in der Kernstrahlungsspektroskopie verwendeten Vielkanalanalysatoren, die das bewirkt, ist folgende:

Normalerweise wird in einem Vielkanalanalysator ein ankommender Impuls vom Analog-Digital-Converter (ADC) entsprechend seiner Höhe einem bestimmten Kanal des Impulshöhenspektrums zugewiesen. Der Impuls wird in diesem Kanal abgespeichert, d. h. der Inhalt dieses Kanals wird um 1 erhöht. Die Kanalnummern eines Spektrums mit $2^n$ Kanälen (Nr. 0 bis Nr. $2^n - 1$) sind dabei im Gerät binär durch n bits dargestellt.

In der Modifikation, wie sie für das Verfahren nach Anspruch 1 verwendet werden kann, werden die Kanalnummern nicht durch n, sondern durch n + 1 bits dargestellt. Das vorangestellte bit Nr. n + 1 wird durch eine zusätzliche elektronische Schaltung, deren Bauart unwesentlich ist, nur für einen solchen Impuls vom Normalzustand "low" (= 0) auf "high" (= 1) gesetzt, der mindestens Delta $t_d$ und höchstens Delta $t_d$ + Delta $t_g$ nach einem vorhergehenden Impuls auftritt.

Ein solcher verzögert koinzidenter Impuls wird also in einem Kanal abgespeichert, dessen Nummer gegenüber derjenigen Nummer, die vom ADC aus der Impulshöhe ermittelt wurde, um $2^n$ erhöht ist. Z. B. wird ein verzögert koinzidenter Impuls, der nach seiner Höhe im Kanal 131 eines 512-Kanäle-Spektrums (n = 9) abgespeichert würde, (binäre Darstellung der Kanalnummer 131 = 0 1 0 0 0 0 0 1 1), im Kanal 131 + 512 des Vielkanalsystems abgespeichert (binäre Darstellung der Kanalnummer 131 + 512 = 1 0 1 0 0 0 0 0 1 1).

Die Abbildungen 3a und 3b zeigen das "Spektrum der restlichen Impulse" bzw. das "Spektrum verzögert koinzidenter Impulse", wie sie bei der Messung einer Rn-222-Probe mit einem für das erfindungsgemäße Verfahren entsprechend modifizierten Flüssigszintillationsspektrometer aufgenommen wurden. Im "Spektrum verzögert koinzidenter Impulse" erscheint der Peak der 7,69 MeV-$\alpha$-Teilchen des Po-214.

Das erfindungsgemäße Verfahren beruht also vor allem darauf, daß von den verzögert koinzidenten Impulsen nur diejenigen, deren Höhen innerhalb eines gewissen Impulshöhenintervalls liegen, direkt zur Auswertung einer Messung herangezogen werden. Durch die Beschränkung auf ein Impulshöhenintervall wird der störende Einfluß von verzögert koinzidenten Impulsen, die nicht von Zerfällen des kurzlebigen Tochternuklids herrühren, wesentlich verringert. Solche verzögert koinzidente Impulse haben ihre Ursache zum einen in der sogenannten zufälligen verzögerten Koinzidenz, bei der der verzögert koinzidente Impuls mit dem "gate opening"-Impuls in keinem kausalen Zusammenhang steht, und zum anderen in der echten verzögerten Koinzidenz von Impulsen, die von Reaktionsprodukten eines Teilchens der Höhenstrahlung ausgelöst werden.

Der Effekt der zufälligen verzögerten Koinzidenz wirkt sich im angeführten Beispiel der Messung von Rn-222 mit einem Flüssigszintillationsspektrometer nach dem erfindungsgemäßen Verfahren derart aus, daß ein Impuls, der nicht von einem Po-214-Zerfall herrührt, im Spektrum verzögert koinzidenter Impulse abgespeichert wird, wenn er zufällig während eines "gate open"-Intervalls auftritt. Die Wahrscheinlichkeit für das Auftreten während eines "gate open"-Intervalls ist gegeben durch den Anteil, den die "gate open"-Intervalle an der gesamten Meßdauer einnehmen. In erster Näherung ist dieser Anteil gleich dem Produkt aus der Länge des "gate open"-Intervalls und der Gesamtimpulsrate R oberhalb der Diskriminatorschwelle, d. h. Delta $t_g$ . R. Durch den Effekt der zufälligen verzögerten Koinzidenz wird also in erster Näherung ein mit dem Faktor Delta $t_g$ . R multipliziertes Abbild des Spektrums der restlichen Impulse in das Spektrum verzögert koinzidenter Impulse transferiert.

Beispielsweise war bei der Messung, deren Spektren in Fig. 3a und 3b dargestellt sind, Delta $t_g$ = 1 ms und R = 40 Impulse/s. Entsprechend erscheint im Spektrum verzögert koinzidenter Impulse (Fig. 3b) zusätzlich zum Po-214-Peak ein mit dem Faktor 0,04 (= 1 ms . 40 $s^{-1}$) multipliziertes Abbild des Spektrums der restlichen Impulse (Fig. 3a), wobei in Fig. 3b deutlich die Rn-222-und Po-218-Peaks zu sehen sind. Es ist ersichtlich, daß nur ein kleiner Teil der Impulse des transferierten Spektrums im Kanalbereich des Po-214-Peaks liegt, und daß deshalb die Impulsrate im Kanalbereich dieses Peaks wesentlich weniger verfälscht wird als die Rate aller verzögert koinzidenten Impulse, die nach dem Stand der Technik zur Auswertung verwendet wird.

Bei der Messung extrem schwacher Proben treten im angeführten Beispiel der Messung von Rn-222 mit einem Flüssigszintillationsspektrometer nach dem erfindungsgemäßen Verfahren im Spektrum verzögert koinzidenter Impulse die durch Höhenstrahlung verursachten echten verzögerten Koinzidenzen gegenüber den zufälligen verzögerten Koinzidenzen in den Vordergrund. In der folgenden Tabelle sind die Ergebnisse einer Nullmessung von 1 Woche Dauer mit einem Flüssigszintillationsspektrometer wiedergegeben. Die Nullprobe besteht aus 3 ml Insta-Gel ® in einem Quarzgefäß. Delta $t_g$ beträgt 1,0 ms. Die Tabelle enthält die Impulsraten im Gesamtspektrum und im Spektrum verzögert koinzidenter Impulse der Nullprobe. Zum Vergleich sind zusätzlich die berechneten Raten der zufälligen verzögerten Koinzidenzen angegeben. Die Impulsraten der Nullprobe sind in der Tabelle jeweils einmal über alle Kanäle oberhalb der Diskriminatorschwelle und einmal über die Kanäle (2 Halbwertsbreiten) des Kanalbereichs, in dem der Po-214-Peak erwartet wird, summiert.

Tabelle

| Impulsrate (s$^{-1}$) der Nullprobe | | | |
|---|---|---|---|
| | Gesamt-spektrum[1] | Spektrum verzögert koinzidenter Impulse | |
| | | gemessen | berechnete zufällige verzögerte Koinzidenzen |
| oberhalb Diskriminatorschwelle<br>davon im Kanalbereich des Po-214-Peaks | 0,21[2]<br><br>4,5.10$^{-3}$[5] | 2.10$^{-4}$<br><br>7.10$^{-6}$ (4 Impulse in 1 Woche) | 4.10$^{-5}$ [3]<br><br>9.10$^{-7}$ [4] |

(1) Impulse des Spektrums verzögert koinzidenter Impulse plus der Impulse des Spektrums der restlichen Impulse.
(2) Gesamtimpulsrate R
(3) berechnet nach der Formel $R^2$ . Delta $t_g$ mit Delta $t_g$ = $10^{-3}$ s
(4) berechnet nach der Formel R . Delta $t_g$ mal L(5) mit Delta $t_g$ = $10^{-3}$ s

Es ist aus der Tabelle ersichtlich, daß im Spektrum verzögert koinzidenter Impulse "gemessen" die Impulsrate im Kanalbereich des Po-214-Peaks mit 7 . $10^{-6}$ s$^{-1}$ wesentlich niedriger ist als die Impulsrate von 2 . $10^{-4}$ s$^{-1}$ im ganzen Spektrum oberhalb der Diskriminatorschwelle, und daß somit das erfindungsgemäße Verfahren eine äußerst niedrige Nachweisgrenze hat, d. h., im Vergleich mit dem Verfahren nach der Literaturstelle: Nuclear Instruments and Methods Nr. 49 (1967), S. 29 - 37, ist die Untergrundzählrate um etwa das 30fache geringer, wie dieses Beispiel verdeutlicht.

Ein weiterer Vorteil des erfindungsgemäßen Verfahrens liegt in der Möglichkeit der Korrektur des Quenching bei der Flüssigszintillationsmessung. Diese Anwendung wird weiter unten beschrieben.

Das erfindungsgemäße Verfahren läßt sich entsprechend Anspruch 2 derart erweitern, daß ein verzögert koinzidenter Impuls in einem aus einer ganzen Schar von Spektren abgespeichert wird. Elektronisch kann dies dadurch bewerkstelligt werden, daß nicht nur das bit Nr. n + 1, sondern die bits n + 1, n + 2, n + 3 usw. für die Zuordnung eines Impulses zu einem bestimmten Spektrum aus der Schar verwendet werden. Es wird also eines dieser bits oder eine Kombination aus mehreren dieser bits von 0 auf 1 gesetzt. Dadurch kann erreicht werden, daß die Impulse der Zerfälle bestimmter Nuklide aus einem Nuklidgemisch in separaten Spektren abgespeichert werden.

Beispielsweise kann die Zuordnung eines verzögert koinzidenten Impulses zu einem bestimmten Spektrum aus einer Schar von Spektren nach Maßgabe des zeitlichen Abstands zum vorhergehenden Impuls erfolgen. Eine Anwendung davon ist die simultane Messung der drei Radium-Isotope Ra-224, Ra-226 und Ra-223 mit einem Flüssigszintillationsspektrometer:
Die Zerfälle dieser drei Radium-Isotope führen zum Teil über Zwischenprodukte zu den Nukliden Bi-212, Bi-214 bzw.
Rn-219, deren Tochternuklide Po-212, Po-214 bzw. Po-215 mit den kurzen Halbwertszeiten von 3 . $10^{-7}$ s, 1,6 . $10^{-4}$ s bzw. 1,8 . $10^{-3}$ s durch Emission von $\alpha$-Teilchen zerfallen. Speichert man alle Impulse z. B. in vier verschiedenen Spektren ab, wobei die Impulse im Spektrum 1 mehr als 1 . $10^{-2}$ s, im Spektrum 2 weniger als 3 . $10^{-6}$ s, im Spektrum 3 zwischen 3 . $10^{-6}$ s und 1 . $10^{-3}$ s und im Spektrum 4 zwischen 1 . $10^{-3}$ s und 1 . $10^{-2}$ s gegenüber einem vorhergehenden Impuls verzögert sind, so erscheinen im Spektrum 2 die Po-212-Zerfälle, im Spektrum 3 die Po-214-Zerfälle, im Spektrum 4 die Po-215-Zerfälle und im Spektrum 1 alle restlichen Impulse. Bei der Auswertung einer solchen Messung muß allerdings beachtet werden, daß bei der Zuordnung der Zerfälle zu den Spektren Überlappungen auftreten. So zerfällt z. B. ein kleiner Teil der Po-214-Kerne in weniger als 3 . $10^{-6}$ s und wird im Spektrum der Po-212-Zerfälle abgespeichert, ein anderer kleiner Teil der Po-214-Kerne zerfällt später als nach 1 . $10^{-3}$ s und wird im Spektrum der Po-215-Zerfälle abgespeichert.

Zum Steuern des Abspeicherns eines verzögert koinzidenten Impulses in einem bestimmten Spektrum aus einer Schar von separaten Spektren können zusätzlich zum zeitlichen Abstand gegenüber dem vorhergehenden Impuls noch weitere Kriterien verwendet werden. Solche sind z. B.:
- Die Art des den "gate opening"-Impuls und/oder den verzögert koinzidenten Impuls verursachenden Zerfalls. $\beta$- und $\alpha$-Zerfälle können bei Verwendung geeigneter Flüssigszintillationscocktails und

EP 0 412 194 B1

geeigneter Meßgeräte z.B. durch pulse-shape-Anlayse, voneinander unterschieden werden.

- Die Impulshöhe des "gate opening"-Impulses. Dieses und auch das vorhergenannte Kriterium sind z. B. bei der Messung von Ra-223 in einem Radiumisotopengemisch mit einem Flüssigszintillationsspektrometer von Nutzen. Weil Ra-223 in natürlichen Proben in der Regel in wesentlich niedrigerer Aktivität auftritt als die anderen Radiumisotope Ra-224, Ra-228 und Ra-226, und weil wegen der relativ langen Halbwertszeit des kurzlebigen Tochternuklids Po-215 ein langes "gate open"-Intervall nötig ist, kann durch zufällige verzögerte Koinzidenzen die Bestimmung der Fläche des Po-215-Peaks im zugehörigen Spektrum verzögert koinzidenter Impulse sehr schwierig sein. Es ist deshalb zweckmäßig, die Gesamtzählrate einer Meßprobe zu verringern, indem man die Ra-224-Aktivität vor der Messung abklingen läßt und die Zerfallskette des Ra-226 durch Austreiben des Rn-222 aus dem Szintillator unterbricht. Es befinden sich dann im wesentlichen noch Ra-226, Ra-228 und dessen Tochter Ac-228 in der Meßprobe. Durch die Bedingung, daß der "gate opening"-Impuls innerhalb des Impulshöhenintervalls des $\alpha$-Zerfalls des Rn-219 (E = 6,82 MeV) liegen muß, können der $\alpha$-Zerfall des Ra-226 (E = 4,78 MeV), der niederenergetische $\beta$-Zerfall des Ra-228 ($E_{max}$ = 0,046 MeV) und zum großen Teil der $\beta$-Zerfall des Ac-228 als Ursachen für einen "gate opening"-Impuls ausgeschlossen werden.

- Das mit dem "gate opening"-Impuls oder mit dem verzögert koinzidenten Impuls koinzidente Auftreten von Gamma-Strahlung in einem weiteren Detektor der Meßanordnung. Umgibt man z. B. einen Flüssigszintillatordetektor mit einem Gamma-Detektor von hoher Nachweiswahrscheinlichkeit, z. B. mit einem NaI(Tl)- oder mit einem BGO-Detektor, so kann durch die Kriterien
a) "gate opening"-Impuls des Flüssigszintillators koinzident mit einem Impuls des Gamma-Detektors und
b) verzögert koinzidenter Impuls des Flüssigszintillators nicht koinzident mit einem Impuls des Gamma-Detektors die Selektivität des Nachweises der Zerfälle des Po-214 besonders gegenüber zufälligen verzögerten Koinzidenzen erhöht werden, weil ca. 82 % der $\beta$- Zerfälle des Bi-214 zur Emission von Gamma-Strahlung führen, wogegen im Anschluß an den $\alpha$-Zerfall des Po-214 keine Emission von Gamma-Strahlung stattfindet.

Nach der Erfindung wird als Detektor einen Flüssigszintillator verwendet, mit dem eine Probe selbst oder eine aus einer Probe abgetrennte Substanz vermischt wird. Wegen der innigen Mischung von radioaktiver Substanz und Szintillator werden alle emittierten $\beta$- und $\alpha$-Teilchen nachgewiesen, abgesehen von sehr niederenergetischen $\beta$-Teilchen und solchen Teilchen, die nur einen kleinen Teil ihrer Bahn im Szintillator zurücklegen. Deshalb werden für die Zerfälle der Paare Bi-214/Po-214, Bi-212/Po-212 und Rn-219/Po-215 Nachweiswahrscheinlichkeiten von über 95 % erreicht, sofern die linearen Abmessungen einer Meßprobe 1 cm oder mehr betragen.

Ein weiterer Vorteil von Flüssigszintillatoren speziell bei der Messung der Zerfälle des Paares Bi-212/Po-212 ist ihre kurze Abklingzeit von wenigen Nanosekunden. Wegen dieser kurzen Abklingzeit sind die Lichtblitze der beiden Zerfälle fast immer deutlich voneinander getrennt, und es ist möglich, ein Spektrum der unverfälschten verzögert koinzidenten Impulse der Po-212-Zerfälle aufzunehmen. Dazu ist es zweckmäßig, "gate-opening"-Impulse und verzögert koinzidente Impulse bereits direkt am Photomultiplier oder gleich hinter dem Photomultiplier voneinander zu trennen, etwa derart, daß jeder Impuls, der über einer eingestellten Diskriminatorschwelle liegt, für einige Zeit ein schnell schaltbares analoges Gate öffnet, das dann von einem verzögert koinzidenten Photomultiplierimpuls passiert werden kann. Hinter dem Gate erscheinen also nur noch die verzögert koinzidenten Impulse. Diese Impulse können nun, ohne daß sie mit ihren "gate opening"-Impulsen überlappen, in eine Form gebracht werden, in der sie von den in der Kernstrahlungsspektroskopie üblichen Analog-Digital-Convertern verarbeitet werden können.

Bei der Verwendung langsamer Detektoren überlappen bereits die Detektorsignale der Zerfälle des Bi-212 und des Po-212. Es läßt sich dann zwar noch leicht die Information über die Zeitpunkte der Zerfälle erhalten, aber der Peak im Spektrum der verzögert koinzidenten Impulse wird in Richtung höherer Kanalnummern verzerrt oder unscharf, weil die Impulshöhen der Überlappungen von "gate opening"-Impuls und verzögert koinzidentem Impuls aufgenommen werden, bzw. weil zur Reduzierung dieses Effekts sehr kurze pulseshaping-Zeiten verwendet werden.

Die zu messenden Nuklide können auf viele verschiedene Weisen in einen Flüssigszintillator eingebracht werden. Zur Messung des Rn-222-Gehalts von Wasser können z. B. einige ml Wasser direkt mit einem geeigneten Szintillator vermischt werden, oder das Rn kann vom Wasser in einen Szintillator, der nicht mit Wasser mischbar ist, extrahiert werden.

Eine Methode zum Einbringen von Rn-222 aus der Luft in einen Flüssigszintillator ist z. B. in "Protocol for using Packard PICO-RAD charcoal LSC detectors to measure Radon concentrations in air", Fa. CANBERRA (1987/88) beschrieben.

7

Nichtgasförmige Stoffe können als wäßrige Lösung mit einem geeigneten Flüssigszintillator gemischt werden. So werden z. B. vom Anmelder seit ca. vier Jahren routinemäßig unter Verwendung von ca. 100 mg $BaCl_2 . 2H_2O$ als Träger und Ba-133 als Ausbeutetracer die Radiumisotope aus Grundwasserproben abgetrennt und als 1 ml wäßrige Bariumchloridlösung mit 2 ml Insta-Gel ® der Fa. Packard zu einer Meßprobe vereinigt.

Häufig werden Nuklide in Form von organischen Komplexen, z. B. durch Extraktion, in Flüssigszintillatoren eingebracht.

Es ist ersichtlich, daß das erfindungsgemäße Verfahren die Messung extrem niedriger Aktivitäten von Nukliden aus den drei natürlichen Zerfallsreihen erlaubt. Solche Nuklide sind alle diejenigen Vorläufer der kurzlebigen Polonium-Isotope, aus denen innerhalb einer vernünftigen Wartezeit eine hinreichend hohe Aktivität der kurzlebigen Po-Isotope anwachsen kann. Die Zerfallsreihe bis zum Po-Isotop darf also nicht durch ein zu langlebiges Zwischenglied blockiert sein. In den Ansprüchen 3 und 4 sind die wichtigsten dieses Nuklide benannt.

Interessant sind die Gehalte dieser Nuklide z. B. in Grundwässern, Werkstoffen und Kunstgegenständen, wo sie zur Abschätzung des Alters herangezogen werden können, in Detektor- und Baumaterialien für Strahlungsmeßgeräte, im Reinstsilicium für die Computerchips, weil $\alpha$-Zerfälle in den Chips Rechenfehler, sogenannte "soft-errors", verursachen können, und in Lebensmitteln.

Weiterhin lassen sich mit dem erfindungsgemäßen Verfahren störende Spuren dieser Nuklide in Proben erkennen, die auf den Gehalt anderer Nuklide untersucht werden sollen. Bei Low-Level-Messungen ist erfahrungsgemäß nicht allein die absolute Höhe der Hintergrundzählrate ein Problem, sondern ebensosehr unerklärbare Schwankungen derselben. Ein beachtlicher Teil dieser Schwankungen dürfte bei Flüssigszintillationsmessungen auf Rn-Kontaminationen zurückzuführen sein.

Diese Kontaminationen sind mit dem erfindungsgemäßen Verfahren jedoch leicht feststellbar, und damit ist die Messung der anderen Nuklide korrigierbar.

Eine weitere wesentliche Anwendungsmöglichkeit des erfindungsgemäßen Verfahrens besteht gemäß Anspruch 9 in der Korrektur des Quenching bei der Flüssigszintillationsmessung anderer Nuklide.

Flüssigszintillationszähler werden meistens zur Messung von $\beta$-Strahlern benutzt. Die Elektronen, die beim $\beta$-Zerfall eines Nuklids ausgesandt werden, haben eine breite Energieverteilung. Im Bereich niedriger Energiewerte werden die Impulse dieser Elektronen vom Rauschen des Meßgerätes überdeckt, so daß nur der Teil des $\beta$-Spektrums oberhalb einer gewissen Schwelle für die Bestimmung der Aktivität zur Verfügung steht. Der Anteil dieses Teils am ganzen $\beta$-Spektrum ändert sich, wenn durch eine Verminderung der Lichtausbeute im Szintillator das Spektrum gestaucht oder "gequencht" wird. Ursache für dieses "Quenching" können eine Vielzahl von chemischen Verunreinigungen besonders bei Anwendungen in Medizin und Biologie sein, so daß die Korrektur des Quenching ein wesentlicher Bestandteil der Flüssigszintillationsmessung ist.

Die Anwendung des erfindungsgemäßen Verfahrens besteht nun darin, daß eine Probe nach ihrer Messung mit Rn-222 versetzt und ein zweites Mal gemessen wird. Das Rn-222-Gas wird dabei zweckmäßigerweise aus einem Gefäß, das Ra-226 enthält, z. B. mit einer Spritze entnommen. Aus der Kanallage des $\alpha$-Peaks des Po-214 im Spektrum verzögert koinzidenter Impulse (s. Fig. 3b) kann dann unter Verwendung von Eichkurven der Wert der anzubringenden Quench-Korrektur bestimmt werden.

Soll z. B. der Tritium-Gehalt einer Probe gemessen werden, so wird zunächst mit einer vorgegebenen Tritiummenge und unterschiedlichen Konzentrationen der quenchenden Verbindung die Tritium-Zählausbeute in Abhängigkeit von der Kanallage des Peaks des Po-214 in Form einer Eichkurve aufgenommen. Alsdann wird die Zählrate der zu messenden Tritium-Probe aufgenommen. Die Probe wird anschließend mit Rn-222 versetzt und nach einer Zeitspanne von einer halben Stunde oder mehr, d. h. wenn die Tochternuklide Pb-214 und Bi-214 ausreichend nachgebildet worden sind, erneut gemessen und die Kanallage des Po-214-Peaks bestimmt. Anhand der Kanallage kann dann aus der Eichkurve die Tritium-Zählausbeute abgelesen werden und damit aus der Zählrate die Zerfallsrate des Tritiums, d. h. der Tritiumgehalt, ermittelt werden.

Die Vorteile dieser Methode gegenüber anderen Methoden der Quenchkorrektur mit einem sogenannten "inneren Standard" liegen darin, daß die Lage des $\alpha$-Peaks genau bestimmt werden kann, daß das Quenching der Probe durch Zugabe des Rn-222, also eines gasförmigen inneren Standards, nicht verändert wird, daß nach gut einem Monat das Rn-222 samt seinen Tochternukliden bis auf eine geringe Aktivität von Pb-210 und dessen Folgeprodukten zerfallen ist, und somit die Probe praktisch wieder in ihrem ursprünglichen Zustand vorliegt, und daß das Rn-222 leicht aus einer praktisch unerschöpflichen Ra-226-Quelle "gemolken" werden kann.

Wird bei der Verwendung von Rn-222 als innerer Standard zur Quenchkorrektur auf die Methode der verzögerten Koinzidenz verzichtet, d. h. nur das Gesamtspektrum aufgenommen, so läßt sich besonders bei stark gequenchten Proben die Mitte des Po-214-Peaks nicht so einfach und genau bestimmen wie bei der Anwendung des erfindungsgemäßen Verfahrens.

Weil die "gate opening"-Impulse für die kurzlebigen Nuklide Po-212 und Po-214 durch den β-Zerfall der Mutternuklide erzeugt werden, muß auch bei der Messung von Nukliden aus den zugehörigen Zerfallsreihen nach dem Prinzip der verzögerten Koinzidenz das Quenching berücksichtigt werden. Das erfindungsgemäße Verfahren erlaubt es, die Größe der notwendigen Quenchkorrektur zu bestimmen.

**Patentansprüche**

1. Verfahren zur Flüssigszintillationsmessung radioaktiver Nuklide der natürlichen Zerfallsreihen des Th-232, U-238 und U-235 durch den Nachweis von Zerfällen der kurzlebigen Glieder Po-212, Po-214 bzw. Po-215 dieser Zerfallsreihen nach dem Prinzip der verzögerten Koinzidenz,
dadurch gekennzeichnet, daß von solchen Impulsen des Meßgerätes, die innerhalb eines festgesetzten kurzen Zeitintervalls nach einem vorhergehenden Impuls auftreten, ein eigenes Impulshöhenspektrum aufgenommen wird.

2. Verfahren nach Anspruch 1 zur simultanen Messung von Nukliden aus mindestens zwei der natürlichen Zerfallsreihen durch den simultanen Nachweis der zugehörigen kurzlebigen Glieder, dadurch gekennzeichnet, daß mehrere auf einen Impuls folgende kurze Zeitintervalle festgesetzt werden und ein auf einen Impuls folgender Impuls nach Maßgabe der Nummer des Zeitintervalls, innerhalb dessen er auftritt, in eines von mehreren separaten Impulshöhenspektren eingeordnet wird.

3. Anwendung des Vefahrens nach Anspruch 1 oder 2 zur Messung von Rn-222 oder Ra-226 und zur Messung des Einflusses dieser Nuklide auf Messungen anderer Nuklide, wobei aus dem Inhalt des Alphapeaks des Po-214 im zugehörigen Spektrum der innerhalb eines festgesetzten kurzen Zeitintervalls auf einen vorhergehenden Impuls folgenden Impulse die Aktivität des Rn-222 oder des Ra-226 berechnet wird.

4. Anwendung des Verfahrens nach Anspruch 1 oder 2 zur Messung von Ra-224 oder Ra-228, wobei aus dem Inhalt des Alphapeaks des Po-212 im zugehörigen Spektrum der innerhalb eines festgesetzten kurzen Zeitintervalls auf einen vorhergehenden Impuls folgenden Impulse die Aktivität des zu messenden Nuklids berechnet wird.

5. Anwendung des Verfahrens nach Anspruch 1 oder 2 zur Bestimmung des Quenching bei der Flüssigszintillationsmessung, wobei eine Probe mit Rn-222 versetzt wird, die Position des Alphapeaks des Po-214 im Spektrum der innerhalb eines festgesetzten kurzen Zeitintervalls auf einen vorhergehenden Impuls folgenden Impulse ermittelt wird, und anhand einer separat aufgenommenen Eichkurve, welche den Zusammenhang zwischen dem Quenching und der Position des Alphapeaks des Po-214 beschreibt, die Größe des Quenching bestimmt wird.

**Claims**

1. A method for liquid scintillation measurement of radioactive nuclides of the natural decay chains of Th-232, U-238 and U-235 by detecting decay events of the short-lived members Po-212, Po-214 or Po-215 of these decay chains by the principle of delayed coincidence, characterized in that a separate pulse height spectrum is taken of those pulses of the measuring device which occur within a fixed short time interval after a preceding pulse.

2. The method of claim 1 for simultaneous measurement of nuclides from at least two of the natural decay chains by simultaneous detection of the corresponding short-lived members, characterized in that several short time intervals following a pulse are fixed, and a pulse following a pulse is classed in one of several separate pulse height spectra in accordance with the number of the time interval within which it occurs.

3. Use of the method of claim 1 or 2 for measuring Rn-222 or Ra-226 and for measuring the influence of these nuclides on measurements of other nuclides, whereby the Rn-222 or Ra-226 activity is calculated from the content of the Po-214 alpha peak in the corresponding spectrum of the pulses following a preceding pulse within a fixed short time interval.

**4.** Use of the method of claim 1 or 2 for measuring Ra-224 or Ra-228, whereby the activity of the nuclide to be measured is calculated from the content of the Po-212 alpha peak in the corresponding spectrum of the pulses following a preceding pulse within a fixed short time interval.

**5.** Use of the method of claim 1 or 2 for determining quenching in liquid scintillation measurement, whereby a sample is mixed with Rn-222, the position of the Po-214 alpha peak in the spectrum of the pulses following a preceding pulse within a fixed short time interval is determined, and the size of quenching is determined with reference to a separately taken calibration curve describing the relation between quenching and the position of the Po-214 alpha peak.

**Revendications**

**1.** Procédé de mesure par scintillation en phase liquide, de nucléides radioactifs des chaînes de désintégration naturelles du Th-232, de l'U-238 et de l'U-235, par la mise en évidence de désintégrations des éléments de courte vie Po-212, Po-214 et Po-215 de ces chaînes de désintégrations, selon le principe de la coïncidence retardée, caractérisé en ce qu à partir de telles impulsions de l'appareil de mesure, qui, à l'intérieur d'un court intervalle de temps fixé, apparaissent après une impulsion précédente, on établit un propre spectre de hauteurs d'impulsions.

**2.** Procédé selon la revendication 1, destiné à la mesure simultanée de nucléides d'au moins deux des chaînes de désintégration naturelles, par la mise en évidence simultanée des éléments de courte vie correspondants, caractérisé en ce que l'on fixe plusieurs intervalles de temps courts succédant à une impulsion, et en ce qu'une impulsion succédant à une impulsion est affectée à l'un de plusieurs spectres séparés de hauteurs d'impulsions, en fonction du numéro de l'intervalle de temps à l'intérieur duquel elle apparaît.

**3.** Utilisation du procédé selon la revendication 1 ou 2, pour la mesure du Rn-222 ou du Ra-226 et pour la mesure de l'influence de ces nucléides sur des mesures d'autres nucléides, dans laquelle on calcule l'activité du Rn-222 ou du Ra-226 à partir de l'analyse du pic alpha du Po-214 dans le spectre correspondant des impulsions qui, à l'intérieur d'un court intervalle de temps fixé, succèdent à une impulsion précédente.

**4.** Utilisation du procédé selon la revendication 1 ou 2, pour la mesure du Ra-224 ou du Ra-228, dans laquelle on calcule l'activité du nucléide à mesurer à partir de l'analyse du pic alpha du Po-212 dans le spectre correspondant des impulsions qui, à l'intérieur d'un court intervalle de temps fixé, succèdent à une impulsion précédente.

**5.** Utilisation du procédé selon la revendication 1 ou 2, pour la détermination de l'extinction au cours de la mesure par scintillation en phase liquide, dans laquelle on mélange un échantillon à du Rn-222, on détecte le pic alpha du Po-214 dans le spectre des impulsions qui, à l'intérieur d'un court intervalle de temps fixé, succèdent à une impulsion précédente, et on détermine la grandeur de l'extinction à l'aide d'une courbe d'étalonnage relevée séparément et exprimant la relation entre l'extinction et la position du pic alpha du Po-214.

## FIG.1a

URAN-238

| | | | Pb 214 26,8m β- | ←α | Po 218 3,05m | ←α | Rn 222 3,8 d | ←α | Ra 226 1600a | ←α | Th 230 8·10⁴a | ←α | U 234 2,5·10⁵a | Pa234 β- | Th 234 24,1d β- | ←α | U 238 4,5·10⁹a |
| Bi 214 19,8m β |
| Pb 210 22 a β- | ←α | Pb 214 162 μs |
| Bi 210 β- 5,0 d |
| Pb 206 stabil | ←α | Po 210 138,4d |

URAN-235

| | | Pb 211 36,1m β- | ←α | Po 215 1,8ms | ←α | Rn 219 3,9 s | ←α | Ra 223 11,4 d | ←α | Th 227 18,7 d | Ac 227 22a β- | ←α | Pa 231 3,3·10⁴a | Th 231 25,6h β- | ←α | U 235 7·10⁸a |
| Tl 207 4,8m β- | ←α | Bi 211 2,15m |
| Pb 207 stabil |

## FIG.1b

## FIG.1c

THORIUM-232

| | | Pb 212 10,6h β- | ←α | Po 216 0,15s | ←α | Rn 220 55,6s | ←α | Ra 224 3,64 d | ←α | Th 228 1,9 a | Ac 228 6,13h β- | ←α | Ra 228 5,7 a β- | ←α | Th 232 1,4·10¹⁰a |
| Tl 208 3,1 m β- | α 36,2% | Bi 212 60,5m β-63,8% |
| Pb 208 stabil | ←α | Po 212 0,3 μs |

FIG.2

EP 0 412 194 B1

FIG.3a

Rn - 222

Po - 218

Spektrum der restlichen Impulse

Diskriminator-schwelle

Impulse pro Kanal und Sekunde

Impulshöhe (Kanal)

EP 0 412 194 B1

FIG. 3b

Spektrum verzögert

koinzidenter Impulse

Po – 214

0,3

0,2

0,1

100     200     300    Impulshöhe
(Kanal )

Impulse pro Kanal und Sekunde

EP 0 412 194 B1